(19) Europäisches Patentamt / European Patent Office / Office européen des brevets

(11) **EP 3 816 416 B1**

(12) **FASCICULE DE BREVET EUROPEEN**

(45) Date de publication et mention de la délivrance du brevet:
**06.07.2022 Bulletin 2022/27**

(21) Numéro de dépôt: **20202982.3**

(22) Date de dépôt: **21.10.2020**

(51) Classification Internationale des Brevets (IPC):
**F01N 3/08** (2006.01)     **F01N 3/20** (2006.01)
**F01N 9/00** (2006.01)

(52) Classification Coopérative des Brevets (CPC):
**F01N 3/0885; F01N 3/0814; F01N 3/0842;**
**F01N 3/2066; F01N 9/00;** F01N 2430/06;
F01N 2550/03; F01N 2570/14; F01N 2610/03;
F01N 2900/0601; F01N 2900/08; F01N 2900/1614;
F01N 2900/1621; Y02A 50/20; Y02T 10/12;  (Cont.)

(54) **PROCÉDÉ DE RÉGÉNÉRATION D'UN PIÈGE À OXYDES D AZOTE DE MOTEUR À COMBUSTION INTERNE ÉQUIPÉ D'UN CATALYSEUR DE RÉDUCTION SÉLECTIVE DES OXYDES D AZOTE**

VERFAHREN ZUM REGENERIEREN EINER STICKOXIDFALLE EINES VERBRENNUNGSMOTORS, DER MIT EINEM KATALYSATOR ZUR SELEKTIVEN REDUKTION VON STICKOXIDEN AUSGESTATTET IST

METHOD FOR REGENERATING A NITROGEN OXIDE TRAP OF AN INTERNAL COMBUSTION ENGINE EQUIPPED WITH A CATALYST FOR SELECTIVE REDUCTION OF NITROGEN OXIDE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.11.2019 FR 1912325**

(43) Date de publication de la demande:
**05.05.2021 Bulletin 2021/18**

(73) Titulaire: **Renault s.a.s**
**92100 Boulogne Billancourt (FR)**

(72) Inventeurs:
• **HENNION, DOMINIQUE**
**45480 Autruy-sur-Juine (FR)**
• **POMES, CHRISTOPHE**
**91750 Champcueil (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
**EP-A1- 3 093 461**          **WO-A1-2008/047170**
**DE-A1-102018 117 187**     **FR-A1- 3 073 895**
**GB-A- 2 549 000**          **US-A1- 2017 074 191**

**EP 3 816 416 B1**

(52) Classification Coopérative des Brevets (CPC):
(Cont.)
Y02T 10/40

**2**

## Description

### Domaine technique de l'invention

La présente invention concerne un procédé de régénération d'un piège à oxydes d'azote de moteur à combustion interne équipé par ailleurs d'un catalyseur de réduction sélective des oxydes d'azote. Elle trouve une application particulièrement avantageuse dans les moteurs du type à allumage par compression (diesel) des véhicules automobiles.

L'invention concerne également un dispositif de motorisation pour la mise en œuvre du procédé de régénération selon l'invention.

### Etat de la technique

Les moteurs à combustion interne modernes, en particulier les moteurs du type à allumage par compression (diesel) des véhicules automobiles qui sont soumis à des normes anti-pollution de plus en plus sévères, sont équipés de divers systèmes de post-traitement des molécules polluantes émises dans les gaz de combustion desdits moteurs, afin de limiter les rejets d'espèces nocives dans l'atmosphère extérieure.

Les moteurs diesel, qui fonctionnent habituellement en mélange pauvre, émettent notamment de grandes quantités d'oxydes d'azote (NOx) dans leurs gaz de combustion. Pour limiter les rejets de ces NOx dans l'atmosphère extérieure, les moteurs diesel sont souvent équipés d'un piège à oxydes d'azote (dit aussi « NOx trap » selon la terminologie anglaise), qui est monté dans le circuit d'échappement de ces moteurs.

De manière connue en soi, un piège à oxydes d'azote fonctionne de manière séquentielle. Pendant le fonctionnement habituel du moteur en mélange pauvre, le piège stocke au moins en partie les molécules de NOx émises dans les gaz de combustion du moteur. On désigne par l'expression « efficacité du piège », la proportion de la quantité de NOx émise par le moteur à la sortie du moteur, et entrant dans le piège, qui y est effectivement stockée, plus précisément adsorbée, le reste ce cette quantité entrante étant directement évacué à la sortie du piège.

A mesure que le piège se remplit, c'est-à-dire que la masse d'oxydes d'azotes adsorbée dans le piège augmente, l'efficacité du piège diminue, de sorte qu'il rejette de plus en plus de NOx émis par le moteur. Il convient alors de faire diminuer la masse de NOx stockée dans le piège pour restaurer l'efficacité de ce dernier. De manière fréquentielle, par exemple quand la masse de NOx stockée atteint un seuil, on procède un basculement du fonctionnement du moteur dans un autre mode de fonctionnement, dit de régénération, qui a pour effet de vider le piège et de ramener la masse de NOx stockée à zéro ou au moins à une valeur plus faible où l'efficacité est restaurée partiellement.

Pour cela, il est connu de provoquer un basculement du réglage du moteur en mélange riche, c'est-à-dire avec une proportion du mélange air-carburant introduit dans le moteur qui est strictement supérieure à la proportion stœchiométrique, typiquement à une richesse sensiblement égale à 1,05. L'apport, à l'entrée du piège à oxydes d'azote, de carburant non brûlé dans les chambres de combustion du moteur a pour effet de provoquer une réduction du stock de NOx en molécules inoffensives (diazote $N_2$ et eau $H_2O$).

Le basculement du mode de fonctionnement du moteur en mélange riche peut par exemple s'effectuer sans modifier la quantité d'air admise dans le moteur, en injectant une quantité supplémentaire de carburant dans chaque cylindre du moteur à un instant du cycle de combustion qui est suffisamment retardé par rapport au point mort haut de combustion du cylindre pour que cette quantité de carburant ne participe pas à la combustion et qu'elle soit évacuée à l'échappement du moteur. On parle de post-injection tardive du carburant.

Cependant, la régénération d'un piège à oxydes d'azote par apport de réducteurs sous forme de carburant imbrûlé pose généralement plusieurs problèmes. Elle entraîne une hausse importante de la consommation de carburant du moteur ; car le moteur fonctionne en mélange riche. D'autre part, comme une proportion du carburant post-injecté tardivement dans les cylindres passe à travers les segments des pistons, elle a tendance à se mélanger à l'huile du moteur et à provoquer une dilution de cette huile par le carburant, ce qui dégrade ses propriétés lubrifiantes. Il devient nécessaire d'augmenter la fréquence des vidanges pour préserver la fiabilité du moteur.

En outre, la régénération d'un piège à oxydes d'azote par réduction des NOx par le carburant ne peut être mise en œuvre que lorsqu'un certain nombre de conditions de fonctionnement du moteur et du véhicule sont remplies, notamment, de manière non limitative, lorsque le régime et la charge du moteur sont compris dans des plages de régime et de charge prédéterminées et que la variation du régime et la variation de la charge sont comprises dans des plages de variation prédéterminées. Ces conditions correspondent globalement à des conditions de fonctionnement relativement stabilisées du moteur à mi-régime et à mi-charge. En dehors de ces conditions, la régénération est impossible physiquement, ou bien elle doit être interdite pour des raisons de fiabilité.

On connaît de l'état de la technique plusieurs procédés de régénération qui visent à résoudre ces problèmes. Par exemple, la publication FR-A1-2926323 prévoit d'interdire la régénération du piège à oxydes d'azote d'un moteur lorsqu'une valeur estimée de la dilution de l'huile du moteur par le carburant est supérieure à un seuil. Ce procédé permet de ménager la fiabilité du moteur mais elle entraîne un risque de rejet accru de NOx dans l'atmosphère extérieure lorsque le piège atteint un seuil de masse élevé et qu'il ne peut être régénéré pendant une durée prolongée.

De même, la publication FR-A1-2985771 prévoit d'autoriser la régénération d'un piège à oxydes d'azote seulement lorsque la richesse de fonctionnement du moteur est supérieure à un seuil, par exemple de l'ordre de 0,7 à 0,8. La régénération, qui s'effectue généralement à une richesse de l'ordre de 1,05 , ne nécessite alors qu'une quantité additionnelle modérée de carburant, ce qui limite la surconsommation de carburant et la dilution de l'huile Cependant, de telles conditions de fonctionnement sont peu fréquentes, si bien que le piège à oxydes d'azote risque de ne pas pouvoir être régénéré pendant une durée prolongée lorsqu'il atteint un seuil de masse de NOx élevée. Les rejets d'oxydes d'azote dans l'atmosphère extérieure peuvent être augmentés de manière inacceptable.

On connaît encore de la publication FR-A1-3029974 un procédé de régénération d'un piège à oxydes d'azote comprenant, lorsque la masse de NOx stockée atteint un seuil et qu'un besoin de régénération est détecté, une étape de chauffage du piège qui se poursuit jusqu'à ce que le piège atteigne une température à laquelle l'efficacité de la régénération est maximale, puis une étape de maintien de cette température jusqu'à ce que les conditions de fonctionnement nécessaires au lancement de la régénération (régime, charge, etc.) soient remplies.

Par l'expression « efficacité de la régénération », on entend l'efficacité de la réaction qui se produit à l'intérieur du piège lors de la régénération, en d'autres termes le rendement de la réaction chimique de réduction des molécules de NOx par les hydrocarbures imbrûlés HC. Plus le rendement est faible, plus la quantité de carburant additionnelle à consommer dans le piège pendant la régénération est importante, et plus la régénération est longue.

L'efficacité de la régénération étant faible en dessous d'un seuil de température d'environ 300°C, le procédé décrit par cette publication permet, en augmentant la température du piège, d'améliorer l'efficacité des régénérations et de limiter la surconsommation de carburant et la dilution de l'huile du moteur. Cependant, les régénérations se font toujours en mélange riche, ce qui limite le gain obtenu, et leur occurrence reste limitée par la nécessité de réunir une pluralité de conditions de fonctionnement (régime, charge, etc.), ce qui ne supprime pas le risque d'être incapable de vider à temps un piège inefficace car plein de NOx. Les améliorations apportées par ce procédé sont encore insuffisantes.

Une autre publication FR-A1-3073895 décrit un procédé de régénération d'un piège à oxydes d'azote, monté dans le circuit d'échappement en amont d'un catalyseur de réduction sélective des oxydes d'azote, comprenant un basculement du mode de fonctionnement du moteur en mélange riche lorsque la masse d'oxydes d'azote stockée dans le piège dépasse un seuil déterminé en fonction d'une valeur de la température en amont du catalyseur de réduction sélective des oxydes d'azote.

## Présentation de l'invention

La présente invention vise à remédier aux défauts des procédés connus de régénération des pièges à oxydes d'azote connus, dans le cas où le moteur dispose en outre, à l'échappement, d'un catalyseur de réduction sélective des oxydes d'azote monté à l'aval du piège.

Un tel cas de figure est en fait fréquent sur les moteurs diesel modernes. En effet, il est connu que l'efficacité des pièges à oxydes d'azote est limitée. Ils ne permettent généralement de filtrer que 50 à 60% des oxydes d'azote du moteur, ce qui peut s'avérer insuffisant compte tenu de la sévérité des normes. L'utilisation d'un catalyseur de réduction sélective des oxydes d'azote permet, à lui seul ou en combinaison avec un piège à oxydes d'azote, d'obtenir une efficacité de traitement des NOx supérieure à 90%. On conserve généralement un piège à oxydes d'azote en combinaison avec un catalyseur de réduction sélective des oxydes d'azote pour pallier le manque d'efficacité à froid de ce dernier, typiquement en dessous de 180°C.

Le procédé selon l'invention propose un procédé de régénération d'un piège à oxydes d'azote monté dans le circuit d'échappement d'un moteur à combustion interne de véhicule automobile, ledit circuit d'échappement comprenant en outre un catalyseur de réduction sélective des oxydes d'azote à l'aval dudit piège, ledit procédé comprenant :

- une étape de calcul d'une valeur de la masse d'oxydes d'azote stockée dans le piège ;

- une étape de comparaison de ladite valeur de masse avec un seuil ; et,

- lorsque ladite masse est supérieure ou égale audit seuil, une étape de régénération du piège, dans laquelle on élimine des oxydes d'azote du piège par un apport de carburant du moteur en amont du piège, ladite régénération pouvant être réalisée selon au moins un premier mode de fonctionnement du moteur en mélange riche dans lequel les oxydes d'azote sont réduits.

La principale caractéristique du procédé selon l'invention est qu'il comprend en outre, lorsque ladite masse d'oxydes d'azote est supérieure ou égale audit seuil :

- une étape dans laquelle on vérifie si les conditions de réalisation de ladite régénération dans ledit premier mode de régénération sont remplies ;

- une étape dans laquelle on vérifie si le catalyseur de réduction sélective des oxydes d'azote présente au moins une efficacité de réduction minimale prédéterminée ;

- lorsque le premier mode est possible et que l'efficacité du catalyseur est insuffisante, une étape de régénération du piège dans ledit premier mode ;

- lorsque l'efficacité du catalyseur est suffisante, une étape de régénération du piège par désorption des oxydes d'azote, dans un deuxième mode de fonctionnement du moteur en mélange pauvre, ledit deuxième mode comprenant une augmentation forte et rapide de la température du piège et un apport de carburant du moteur en amont du piège.

**Brève description des figures**

D'autres caractéristiques et avantages de l'invention apparaîtront à la lecture de la description qui suit d'un mode de réalisation non limitatif de l'invention, à l'appui des figures annexées, dans lesquelles :

[Fig. 1] est une vue schématique d'un dispositif de motorisation apte à la mise en œuvre du procédé selon l'invention.

[Fig. 2] est un logigramme des étapes d'un mode de réalisation du procédé selon l'invention.

**Description détaillée des figures**

Dans la description qui va suivre, des chiffres de référence identiques désignent des pièces identiques ou ayant des fonctions similaires.

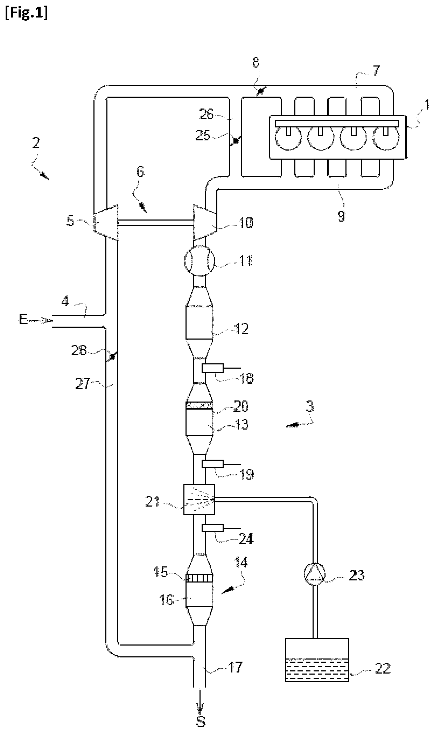

Sur la figure 1, on a représenté un dispositif de motorisation apte à la mise en œuvre du procédé selon l'invention. Le dispositif comprend un moteur à combustion interne 1 qui est ici du type à allumage par compression (diesel), par exemple à injection directe.

Le moteur 1 est associé à un circuit d'admission d'air 2 et à un circuit d'échappement 3. L'air frais prélevé dans l'atmosphère extérieure pénètre dans le circuit d'admission 2 dans le sens de la flèche E, dans un tuyau d'entrée d'air 4. Il peut traverser des composants non représentés sur la figure tels qu'un filtre à air. A l'admission, le moteur 1 comporte un compresseur 5 d'un turbocompresseur 6 de suralimentation. L'air traverse le compresseur 5 puis un collecteur d'admission 7, ou répartiteur 7, du moteur. Une vanne 8 de réglage du débit des gaz admis dans le moteur peut être montée entre le compresseur 5 et le répartiteur 7, ainsi que d'autres composants non représentés, comme par exemple un refroidisseur d'air de suralimentation.

Les gaz de combustion du moteur sont évacués dans un collecteur d'échappement 9 du moteur, puis ils traversent la turbine 10 du turbocompresseur 6. La turbine peut être du type à géométrie fixe et associée à un circuit de décharge à l'échappement (non représenté) ou du type à géométrie variable, pour le réglage de l'énergie de détente prélevée par la turbine sur les gaz d'échappement.

Sur l'exemple de la figure 1, les gaz d'échappement traversent ensuite, d'amont en aval dans leur sens de circulation : un débitmètre 11 de mesure du débit massique des gaz d'échappement Qech ; un catalyseur d'oxydation 12 ; un piège à oxydes d'azote 13 ; et, un troisième dispositif de post-traitement des gaz 14, comprenant un filtre à particules 15 et un catalyseur de réduction sélective des oxydes d'azote 16, dit aussi catalyseur SCR (acronyme anglais pour : Selective Catalytic Réduction). Enfin les gaz d'échappement sont évacués dans l'atmosphère extérieure par un pot d'échappement 17, dans le sens de la flèche E.

Ici, le piège à oxydes d'azote 13 est associé à un capteur d'oxydes d'azote amont 18 et à un capteur d'oxydes d'azote aval 19, aptes à mesurer respectivement une valeur de concentration d'oxydes d'azote en amont [NOx]in et en aval [NOx]out du piège. En variante, il est possible que la concentration d'oxydes d'azote amont soit déterminée par un modèle cartographié en fonction du point de fonctionnement du moteur.

Les mesures de concentration d'oxydes d'azote amont [NOx]in et aval [NOx]out permettent, en association avec la mesure du débit des gaz d'échappement Qech par le débitmètre 11, de déterminer la masse d'oxydes d'azote MNOx stockée dans le piège 13, comme il sera détaillé plus loin. Bien entendu, d'autres variantes sont possibles : Par exemple, il est possible que la concentration d'oxydes d'azote amont [NOx]in soit déterminée par un modèle cartographié en fonction du point de fonctionnement du moteur. Il est aussi possible que le débit des gaz d'échappement soit déterminé par d'autres moyens que le débitmètre 11. Notamment il peut être prévu un débitmètre à l'admission du moteur, apte à mesurer le débit des gaz d'admission Qadm. Le débit des gaz d'échappement est alors déterminé comme la somme dudit débit des gaz d'admission et du débit de carburant Qcarb admis dans le moteur.

Sur l'exemple de la figure 1, le piège à oxydes d'azote 13 comprend en outre des moyens de chauffage 20, par exemple une grille chauffante électrique 20, apte à chauffer rapidement le piège jusqu'à un seuil de température où l'efficacité de la régénération présente au moins une valeur minimale donnée. Bien entendu, d'autres méthodes connues de chauffage sont envisageables, notamment la dégradation du rendement de combustion du moteur grâce à une injection retardée de carburant dans les cylindres du moteur, qui peut être utilisée seule ou en combinaison avec le chauffage par une telle grille chauffante.

Le catalyseur SCR 16 du troisième dispositif de post-traitement 14 est alimenté en réducteurs à base d'urée (Adblue®) par l'intermédiaire d'un injecteur d'urée qui injecte l'urée dans un mélangeur 21 implanté dans le circuit d'échappement 3 en amont du troisième dispositif de post-traitement 14. Les réducteurs proviennent généralement d'une solution liquide qui est stockée dans un réservoir 22 et qui est acheminée vers l'injecteur d'urée grâce à une pompe 23.

Pour la mise en œuvre du procédé selon l'invention, le troisième dispositif de post-traitement 14 est associé à des moyens de mesure d'une valeur représentative de la température du catalyseur SCR 16 et/ou de l'injecteur d'urée. Dans l'exemple de la figure 1, c'est un capteur de température 24 qui est monté dans le circuit d'échappement 3 en amont du troisième dispositif de post-traitement 14. Bien entendu, d'autres variantes sont possibles sans nuire à la généralité de l'invention. On peut par exemple prévoir un capteur de température à proximité du mélangeur 21 pour déterminer une valeur de température d'injecteur T. On peut aussi prévoir un capteur à l'entrée et/ou à la sortie du troisième dispositif de post-traitement 14 de manière à modéliser la température interne du catalyseur SCR 16, etc.

On notera aussi que d'autres arrangements de dispositifs de post-traitement sont possibles sans nuire à la généralité de l'invention. Par exemple, il est possible que le catalyseur d'oxydation 12 et le piège à oxydes d'azote 13 soient réunis dans un seul dispositif de post-traitement combiné. Il est aussi possible que le filtre à particules 15 et le catalyseur SCR 16 soient des dispositifs de post-traitement séparés.

En outre, le circuit d'échappement comporte ici un circuit de recirculation partielle 25 à haute pression des gaz d'échappement à l'admission du moteur, dit aussi circuit EGR HP (acronyme anglais pour : Exhaust Gas Recycling - High Pressure). Ce circuit prend naissance en un point du circuit d'échappement situé en amont de la turbine 10 et son autre extrémité débouche en un point du circuit d'admission situé en aval du compresseur 5. Il comporte une vanne de réglage 26 du débit des gaz EGR HP recyclés.

Le circuit d'échappement comporte en outre un circuit de recirculation partielle 27 à basse pression des gaz d'échappement à l'admission du moteur, dit aussi circuit EGR LP (acronyme anglais pour : Exhaust Gas Recycling - Low Pressure). Ce circuit prend naissance en un point du circuit d'échappement situé en aval de la turbine 10, plus précisément ici après la sortie des différents dispositifs de post-traitement 12,13,14, et son autre extrémité débouche en un point du circuit d'admission situé en amont du compresseur 5. Il comporte une vanne de réglage 28 du débit des gaz EGR LP recyclés. Il peut aussi comporter d'autres composants non représentés, comme par exemple un filtre, un refroidisseur, etc.

Le fonctionnement du moteur est placé sous la supervision d'un calculateur électronique (non représenté), qui détermine un certain nombre de paramètres de fonctionnement du moteur à partir d'une pluralité de capteurs et qui pilote une pluralité d'actionneurs du moteur.

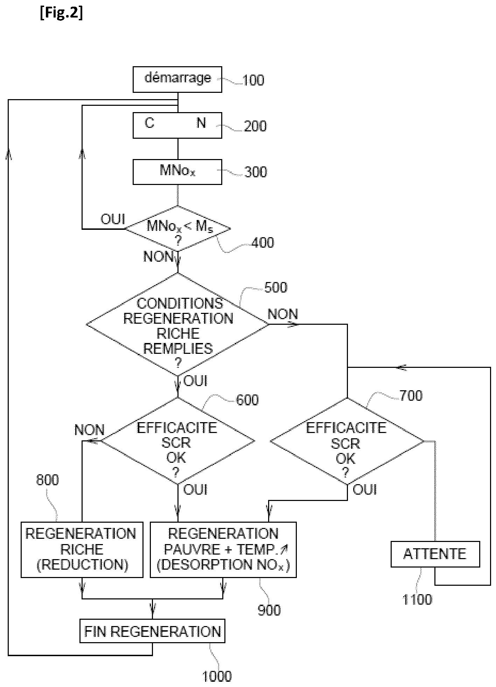

Sur la figure 2, on a représenté un logigramme des différentes étapes du procédé, selon un mode de réalisation non limitatif de celui-ci. L'invention se fonde sur le fait que, en dehors du mode de régénération en mode riche (à une richesse voisine de 1) qui permet de régénérer un piège en le vidant de ses NOx grâce à leur réduction par du carburant, il est également possible de vider un piège de ses NOx par simple désorption. Pour cela, il convient de provoquer une augmentation forte et rapide de la température du piège à oxydes d'azote, accompagnée d'un apport d'une quantité importante de réducteurs (sous forme de carburant du moteur). Toutefois il faut conserver une valeur de richesse qui corresponde à un fonctionnement en mélange pauvre, car un mélange riche est de nature à provoquer une réaction de réduction des NOx, et non pas la réaction de désorption recherchée.

Par exemple, la température est élevée presque instantanément au-dessus d'une valeur de l'ordre de 600 à 650°C, et la richesse est portée à une valeur voisine de 0,9 , qui est supérieure à la richesse de fonctionnement habituelle d'un moteur diesel (par exemple entre 0,3 et 0,6) sur le point de fonctionnement considéré, mais qui est inférieure à 1, est qui reste donc un mode de fonctionnement en mélange pauvre. On notera que ces conditions de température et de richesse correspondent à celles d'une purge classique de filtre à particules par combustion des suies. Par conséquent, la régénération d'un piège à oxydes d'azote par désorption des NOx adsorbés dans des conditions antérieures de température moins élevée, permet en même temps de purger un filtre à particules présent dans le circuit d'échappement du moteur, ce qui permet d'éviter des purges spécifiques dudit filtre, et ainsi d'économiser globalement du carburant. En outre, comme la richesse du mélange utilisé est plus pauvre que dans le cas d'une régénération du piège par réduction des NOx, la consommation de carburant est moindre. Un avantage supplémentaire est qu'un tel procédé de désorption peut se dérouler sans que les conditions de fonctionnement qui sont habituellement nécessaires à la régénération du piège par réduction des NOx en mélange riche, et qui sont assez contraignantes, soient réunies.

Toutefois, l'inconvénient de ce mode de régénération par désorption est que les NOx sont relargués dans le circuit d'échappement du moteur sans être traités. Selon le procédé, la présence d'un catalyseur de réduction sélective des oxydes d'azote, monté à l'aval du piège offre le moyen de réduire ces NOx relargués pour éviter qu'ils ne soient rejetés dans l'atmosphère extérieure, dès lors que ledit catalyseur de réduction sélective des oxydes d'azote est efficace.

La figure 2 illustre de manière détaillée les étapes du procédé de régénération correspondant : Le procédé débute lors du démarrage du moteur (étape 100). Le procédé proprement dit est itératif, et comprend une première étape 200 au cours de laquelle on détermine une valeur de consigne de couple du moteur C et une valeur de régime du moteur N. Par exemple, le régime est mesuré par un capteur (non représenté sur la figure 1) monté sur le moteur, et la consigne de couple C est cartographiée à partir d'une valeur d'enfoncement d'une pédale d'accélérateur du véhicule et du régime du moteur. A cette étape, le calculateur du moteur déduit aussi dudit régime N et dudit couple C, des consignes de quantité d'air Qair, de quantité de gaz d'échappement à haute pression Qegr,hp et à basse pression Qegr,lp et de carburant Qcarb à introduire dans le moteur. Puis le calculateur règle un certain nombre d'actionneurs du moteur de manière à atteindre lesdites consignes : vanne de réglage du débit des gaz 8 ; vannes EGR 26,28 ; injecteurs de carburant du moteur ; etc.

Le procédé se poursuit par une étape 300 de calcul de la masse d'oxydes d'azote stockée MNOx dans le piège 13. Dans un mode de réalisation, la masse d'oxydes d'azote à l'instant courant t peut se calculer en ajoutant à la valeur calculée à l'instant précédent du procédé itératif, une valeur correspondant au produit du débit des gaz d'échappement Qech, de la différence entre la concentration d'oxydes d'azote amont [NOx]in et la concentration d'oxydes d'azote aval [NOx]out, et du pas de temps $\Delta t$ séparant l'instant précédent de l'instant courant. En résumé, le calcul est obtenu selon la formule suivante :

$$MNOx(t) = MNOx(t-\Delta t) + Qech \times ([NOx]in - [NOx]out) \times \Delta t$$

Par exemple, le débit des gaz d'échappement Qech provient d'une mesure du débitmètre 11. Par exemple, les concentrations d'oxdes d'azote amont [NOx]in et aval [NOx]out proviennent respectivement de mesures des capteurs de concentration d'oxydes d'azote amont 18 et aval 19. Par exemple, on initialise la valeur calculée de la masse d'oxydes d'azote à zéro à la fin d'une régénération complète du piège.

Le procédé se poursuit par une étape de comparaison 400 de ladite masse MNOx avec un seuil de masse Ms. Tant que ladite masse reste inférieure audit seuil, le procédé reprend à l'étape 200, à partir de laquelle le moteur est réglé classiquement en mélange pauvre et les NOx continuent d'être adsorbés dans le piège. Dans le cas contraire, c'est-à-dire lorsque la masse atteint (ou dépasse) ledit seuil, le procédé oriente vers une deuxième étape de test 500, au cours de laquelle on vérifie si les conditions de lancement d'une régénération en mélange riche (i.e. par réduction des NOx) sont remplies. Ces conditions comprennent notamment les points suivants :

- Le régime du moteur N est dans une plage de régime prédéterminée.

- Le couple du moteur C est dans une plage de régime prédéterminée (les seuils pouvant dépendre du régime).

- La variation du régime dN/dt est dans une plage de variation prédéterminée.

- La variation du couple dC/dt est dans une plage de variation prédéterminée.

Bien entendu, d'autres conditions supplémentaires peuvent être prévues, notamment des conditions environnementales de température, d'altitude, etc., sans nuire à la généralité de l'invention.

Si la totalité des conditions retenues est remplie, le procédé oriente vers une troisième étape de test 600 au cours de laquelle on vérifie si le catalyseur SCR 16 est efficace. Dans le cas contraire, c'est-à-dire si au moins l'une des conditions n'est pas remplie, le procédé oriente vers une quatrième étape de test 700 au cours de laquelle on vérifie aussi si le catalyseur SCR est efficace. La vérification peut comporter la comparaison de la température T, mesurée par le capteur de température 24, avec un seuil, typiquement de l'ordre de 180°C à 230°C. Lorsque ladite température est supérieure audit seuil, l'injecteur d'urée est apte à injecter des réducteurs (Adblue®) en amont du troisième dispositif de post-traitement 14 et le catalyseur SCR 16 présente un rendement de réduction des NOx qui est suffisant.

Si à l'étape 600, on conclut que le catalyseur SCR n'est pas efficace, alors le procédé oriente vers une étape 800 de régénération du piège 13 en mode riche (richesse voisine de 1,05) qui correspond à une réduction des NOx. Dans le cas contraire, le procédé oriente vers une étape 900 de régénération du piège par gradient de température élevé et apport de carburant en mélange pauvre, permettant une désorption des NOx, ce derniers étant réduits dans le catalyseur SCR sous l'action de l'Adblue®.

Si à l'étape 700, on conclut que le catalyseur n'est pas efficace, alors le procédé oriente vers une étape d'attente 1100, dans laquelle le moteur conserve son réglage de fonctionnement habituel en mélange pauvre déterminé à l'étape 200. Dès que le catalyseur SCR devient efficace, l'étape 700 se poursuit par l'étape 900.

On notera que l'étape d'attente 1100 correspond à une étape de chauffe du catalyseur SCR 16 qui est réalisée lors des démarrages à froid du moteur. Pour cela, on peut procéder à une mise en action de la grille chauffante 20 du piège à oxydes d'azote et/ou à un réglage du moteur dans un mode de combustion dont le rendement est dégradé, par exemple en procédant à des injections de carburant retardées participant à la production du couple (on parle de post-injection rapprochée).

Une telle étape est d'une durée limitée (par exemple environ 30 secondes). Pour éviter que le piège à oxydes d'azote présente une efficacité insuffisante de stockage des NOx pendant cette phase d'attente, il est avantageux de prévoir une marge suffisante sur le seuil de masse des NOx qui déclenche la régénération du piège.

Les étapes 800 ou 900 se poursuivent de préférence jusqu'à ce que le piège 13 soit entièrement régénéré. Par exemple, la fin de la régénération peut être signalée par le basculement d'un signal de sonde à oxygène (non représentée sur la figure 1) montée à l'aval du piège 13. Il est aussi possible de procéder à des régénérations partielles. Après la fin de la régénération (étape 1000), le procédé reprend à l'étape 200, à partir de laquelle le moteur est à nouveau réglé dans son mode de fonctionnement en mélange pauvre habituel, pour son point de fonctionnement régime-charge courant.

## Revendications

1. Procédé de régénération d'un piège à oxydes d'azote (13) monté dans le circuit d'échappement (3) d'un moteur (1) à combustion interne de véhicule automobile, ledit circuit d'échappement (3) comprenant en outre un catalyseur de réduction sélective des oxydes d'azote (16) à l'aval dudit piège, ledit procédé comprenant :

   - une étape de calcul (300) d'une valeur de la masse d'oxydes d'azote (MNOx) stockée dans le piège (13) ;
   - une étape de comparaison (400) de ladite valeur de masse (MNOx) avec un seuil (Ms) ; et,
   - lorsque ladite masse (MNOx) est supérieure ou égale audit seuil (Ms), une étape de régénération (800,900) du piège (13) dans laquelle on élimine des oxydes d'azote du piège par un apport de carburant du moteur en amont du piège (13), ladite régénération pouvant être réalisée selon au moins un premier mode de fonctionnement du moteur en mélange riche dans lequel les oxydes d'azote sont réduits,

   **CARACTERISE EN CE QU'**il comprend en outre, lorsque ladite masse d'oxydes d'azote (MNOx) est supérieure audit seuil (Ms) :

   - une étape (500) dans laquelle on vérifie si les conditions de réalisation de ladite régénération dans ledit premier mode de régénération sont remplies ;
   - une étape (600,700) dans laquelle on vérifie si le catalyseur de réduction sélective des oxydes d'azote (16) présente au moins une efficacité de réduction minimale prédéterminée ;
   - lorsque le premier mode est possible et que l'efficacité du catalyseur est insuffisante, une étape de régénération (800) du piège dans ledit premier mode ;
   - lorsque l'efficacité du catalyseur est suffisante, une étape de régénération (900) du piège (13), par désorption des oxydes d'azote, dans un deuxième mode de fonctionnement du moteur en mélange pauvre, ledit deuxième mode comprenant une augmentation forte et rapide de la température du piège (13) et un apport de carburant du moteur en amont du piège (13).

2. Procédé selon la revendication 1, **caractérisé en ce que** dans le deuxième mode de fonctionnement, la richesse est supérieure à la richesse habituelle de fonctionnement du moteur hors des phases de régénération, pour le point de fonctionnement du moteur considéré.

3. Procédé selon la revendication 2, **caractérisé en ce que** dans le deuxième mode de régénération, la richesse de fonctionnement est augmentée à une valeur sensiblement égale à 0,9.

4. Procédé selon l'une quelconque des revendications précédentes, **caractérisé en ce que** dans le deuxième mode de régénération, la température du piège est augmentée au moins au-dessus de 600°C.

5. Procédé selon l'une quelconque des revendications précédentes, **caractérisé en ce que** les conditions de réalisation de la régénération du piège dans le premier mode comprennent au moins les vérifications suivantes :

   - le régime du moteur (N) est compris dans une plage de régime prédéterminée ;
   - le couple du moteur (C) est compris dans une plage de couple prédéterminée ;

- la variation du régime du moteur est dans une plage de variation prédéterminée ; et,
- la variation du couple du moteur est dans une plage de variation prédéterminée.

**6.** Procédé selon l'une quelconque des revendications précédentes, **caractérisé en ce qu'**on vérifie que le catalyseur de réduction sélective des oxydes d'azote présente au moins une efficacité minimale prédéterminée en vérifiant qu'une valeur représentative de la température (T) dudit catalyseur (16) ou des moyens d'injection de réducteurs (21) en amont dudit catalyseur (16) est supérieure à un seuil prédéterminé.

**7.** Procédé selon l'une quelconque des revendications précédentes, **caractérisé en ce que**, dans le deuxième mode de régénération du piège, l'élévation de température du piège à oxydes d'azote est obtenue en dégradant le rendement de combustion du moteur grâce à des injections retardées de carburant.

**8.** Procédé selon l'une quelconque des revendications précédentes, **caractérisé en ce que**, dans le deuxième mode de régénération du piège, l'élévation de température du piège à oxydes d'azote est obtenue en actionnant des moyens de chauffage (20) disposés à l'entrée du piège (13), notamment une grille de chauffage électrique (20).

**9.** Procédé selon l'une quelconque des revendications précédentes, **caractérisé en ce que** la masse d'oxydes d'azote (MNOx) stockée dans le piège (13) est calculée à chaque instant courant(t) comme la somme de la masse calculée à l'instant (t-$\Delta$t) au pas de calcul précédent, et du produit : du débit des gaz d'échappement (Qech) du moteur ; de la différence entre la concentration d'oxydes d'azote en amont du piège ([NOx]in) et de la concentration d'oxydes d'azote en aval du piège ([NOx]out) ; et, du pas de temps ($\Delta$t) séparant les deux pas de calcul.

**10.** Procédé selon la revendication précédente, **caractérisé en ce que** le débit des gaz d'échappement (Qech) est mesuré par un débitmètre (11) et que les concentrations d'oxydes d'azote amont ([NOx]in,[NOx]out) sont déterminées respectivement par des capteurs d'oxydes d'azote (18,19) montés en amont et en aval du piège.


**Patentansprüche**

**1.** Verfahren zur Regeneration einer Stickoxidfalle (13), die in den Abgasstrang (3) eines Kraftfahrzeug-Verbrennungsmotors (1) eingebaut ist, wobei der Abgasstrang (3) ferner einen Katalysator zur selektiven Reduktion der Stickoxide (16) stromab der Falle umfasst, das Verfahren umfassend:

- einen Schritt des Berechnens (300) eines Werts der Masse von Stickoxiden (MNOx), die in der Falle (13) gespeichert ist;
- einen Schritt des Vergleichens (400) des Massewerts (MNOx) mit einer Schwelle (Ms); und,
- wenn die Masse (MNOx) größer als oder gleich der Schwelle (Ms) ist, einen Schritt des Regenerierens (800, 900) der Falle (13), bei dem Stickoxide aus der Falle durch eine Zugabe von Brennstoff des Motors stromauf der Falle (13) eliminiert werden, wobei die Regeneration gemäß wenigstens einem ersten Betriebsmodus des Motors bei fettem Gemisch durchgeführt werden kann, wobei die Stickoxide reduziert werden,

**dadurch gekennzeichnet, dass** es ferner, wenn die Masse von Stickoxiden (MNOx) größer als die Schwelle (Ms) ist, Folgendes umfasst:

- einen Schritt (500), bei dem überprüft wird, ob die Durchführungsbedingungen der Regeneration im ersten Regenerationsmodus erfüllt sind;
- einen Schritt (600, 700), bei dem überprüft wird, ob der Katalysator zur selektiven Reduktion der Stickoxide (16) wenigstens eine vorbestimmte minimale Reduktionswirksamkeit aufweist;
- wenn der erste Modus möglich ist und die Wirksamkeit des Katalysators unzureichend ist, einen Schritt des Regenerierens (800) der Falle im ersten Modus;
- wenn die Wirksamkeit des Katalysators ausreichend ist, einen Schritt des Regenerierens (900) der Falle (13) durch Desorption der Stickoxide in einem zweiten Betriebsmodus des Motors bei magerem Gemisch, wobei der zweite Modus eine starke und schnelle Erhöhung der Temperatur der Falle (13) und eine Zugabe von Brennstoff des Motors stromauf der Falle (13) umfasst.

**2.** Verfahren nach Anspruch 1, **dadurch gekennzeichnet, dass** im zweiten Betriebsmodus die Anreicherung höher als die gewöhnliche Betriebsanreicherung des Motors außerhalb der Regenerationsphasen für den jeweiligen Betriebsmodus des Motors ist.

3. Verfahren nach Anspruch 2, **dadurch gekennzeichnet, dass** im zweiten Regenerationsmodus die Betriebsanreicherung auf einen Wert von im Wesentlichen gleich 0,9 erhöht wird.

4. Verfahren nach einem der vorhergehenden Ansprüche, **dadurch gekennzeichnet, dass** im zweiten Regenerationsmodus die Temperatur der Falle wenigstens auf über 600 °C erhöht wird.

5. Verfahren nach einem der vorhergehenden Ansprüche, **dadurch gekennzeichnet, dass** die Durchführungsbedingungen der Regeneration der Falle im ersten Modus wenigstens die folgenden Überprüfungen umfassen:

   - die Drehzahl des Motors (N) liegt in einem vorbestimmten Drehzahlbereich;
   - das Drehmoment des Motors (C) liegt in einem vorbestimmten Drehmomentbereich;
   - die Variation der Drehzahl des Motors liegt in einem vorbestimmten Variationsbereich; und,
   - die Variation des Drehmoments des Motors liegt in einem vorbestimmten Variationsbereich.

6. Verfahren nach einem der vorhergehenden Ansprüche, **dadurch gekennzeichnet, dass** überprüft wird, dass der Katalysator zur selektiven Reduktion der Stickoxide wenigstens eine minimale Wirksamkeit aufweist, indem überprüft wird, dass ein Wert, der für die Temperatur (T) des Katalysators (16) oder der Mittel zur Einspritzung von Reduktoren (21) stromauf des Katalysators (16) höher als eine vorbestimmte Schwelle ist.

7. Verfahren nach einem der vorhergehenden Ansprüche, **dadurch gekennzeichnet, dass** im zweiten Regenerationsmodus der Falle der Temperaturanstieg der Stickoxidfalle durch Absenken der Verbrennungsleistung des Motors mithilfe von verzögerten Brennstoffeinspritzungen erreicht wird.

8. Verfahren nach einem der vorhergehenden Ansprüche, **dadurch gekennzeichnet, dass** im zweiten Regenerationsmodus der Falle der Temperaturanstieg der Stickoxidfalle durch Betätigung der Heizmittel (20), die am Einlass der Falle (13) angeordnet sind, insbesondere eines elektrischen Heizgitters (20), erreicht wird.

9. Verfahren nach einem der vorhergehenden Ansprüche, **dadurch gekennzeichnet, dass** die Masse von Stickoxiden (MNOx), die in der Falle (13) gespeichert ist, zu jedem laufenden Zeitpunkt(t) als die Summe der zum Zeitpunkt (t-$\Delta$t) beim vorhergehenden Berechnungsschritt berechneten Masse und des Produkts von Folgendem berechnet wird: des Durchsatzes der Abgase (Qech) des Motors; der Differenz zwischen der Konzentration von Stickoxiden stromauf der Falle ([NOx]in) und der Konzentration von Stickoxiden stromab der Falle ([NOx]out); und des Zeitabstands ($\Delta$t), der die zwei Berechnungsschritte trennt.

10. Verfahren nach dem vorhergehenden Anspruch, **dadurch gekennzeichnet, dass** der Durchsatz der Abgase (Qech) durch einen Durchsatzmesser (11) gemessen wird und die Konzentrationen von stromabwärtigen Stickoxiden ([NOx] in, [NOx]out) jeweils durch Stickoxidsensoren (18, 19) bestimmt werden, die stromauf und stromab der Falle angebracht sind.

## Claims

1. Method for regenerating a nitrogen oxides trap (13) mounted in the exhaust circuit (3) of a motor vehicle internal combustion engine (1), said exhaust circuit (3) further comprising a catalytic converter (16) for the selective catalytic reduction of the nitrogen oxides downstream of said trap, said method comprising:

   - a calculation step (300) of calculating a value of the mass of nitrogen oxides (MNOx) stored in the trap (13);
   - a comparison step (400) of comparing said mass value (MNOx) against a threshold (Ms); and
   - when said mass (MNOx) is greater than or equal to said threshold (Ms), a regeneration step (800, 900) of regenerating the trap (13), in which step the nitrogen oxides are eliminated from the trap by supplying fuel from the engine upstream of the trap (13), it being possible for said regeneration to be performed in at least a first mode of operation of the engine with a rich mixture, in which mode the nitrogen oxides are reduced,

   **CHARACTERIZED IN THAT** it further comprises, when said mass of nitrogen oxides (MNOx) is above said threshold (Ms):

   - a step (500) of checking whether the conditions for performing said regeneration in said first regeneration mode are met;

- a step (600, 700) of checking whether the catalytic converter (16) for the selective catalytic reduction of the nitrogen oxides has at least a predetermined minimum reduction efficiency;
- when the first mode is possible and at the same time the catalytic converter efficiency is insufficient, a step (800) of regenerating the trap in said first mode;
- when the efficiency of the catalytic converter is sufficient, a step (900) of regenerating the trap (13) by desorption of the nitrogen oxides in a second mode of operation of the engine with a lean mixture, said second mode involving a substantial and rapid increase in the temperature of the trap (13) and a supply of fuel from the engine upstream of the trap (13).

2. Method according to Claim 1, **characterized in that** in the second mode of operation, the richness is higher than the usual richness at which the engine operates outside of the regeneration phases, for the engine operating point concerned.

3. Method according to Claim 2, **characterized in that** in the second regeneration mode, the operating richness is increased to a value substantially equal to 0.9.

4. Method according to any one of the preceding claims, **characterized in that** in the second regeneration mode, the temperature of the trap is increased at least above 600°C.

5. Method according to any one of the preceding claims, **characterized in that** the conditions for performing regeneration of the trap in the first mode involve at least the following checks:

   - that the engine speed (N) is comprised within a predetermined speed range;
   - that the engine torque (C) is comprised within a predetermined torque range;
   - that the variation in engine speed is within a predetermined variation range; and
   - that the variation in engine torque is within a predetermined variation range.

6. Method according to any one of the preceding claims, **characterized in that** there is a check made to ensure that the catalytic converter for the selective catalytic reduction of the nitrogen oxides has at least a predetermined minimum efficiency by checking that a value indicative of the temperature (T) of said catalytic converter (16) or of the means (21) for injecting reducing agents upstream of said catalytic converter (16) is above a predetermined threshold.

7. Method according to any one of the preceding claims, **characterized in that**, in the second mode of regeneration of the trap, the increase in temperature of the nitrogen oxides trap is obtained by degrading the combustion efficiency of the engine by retarding the injection of fuel.

8. Method according to any one of the preceding claims, **characterized in that**, in the second mode of regeneration of the trap, the increase in temperature of the nitrogen oxides trap is obtained by actuating heating means (20) located at the inlet of the trap (13), notably an electrical heating grating (20).

9. Method according to any one of the preceding claims, **characterized in that** the mass (MNOx) of nitrogen oxides stored in the trap (13) is calculated at each current instant (t) as being the sum of the mass calculated at the instant (t-$\Delta$t) at the previous calculation event, and of the product: of the engine exhaust gas flow rate (Qech); of the difference between the nitrogen oxides concentration upstream of the trap ([NOx] in) and of the nitrogen oxides concentration downstream of the trap ([NOx]out); and of the time interval ($\Delta$t) separating the two calculation events.

10. Method according to the preceding claim, **characterized in that** the exhaust gas flow rate (Qech) is measured by a flow meter (11) and **in that** the upstream nitrogen oxides concentrations ([NOx]in, [NOx]out) are determined respectively by nitrogen oxide sensors (18, 19) mounted upstream and downstream of the trap.

[Fig.1]

[Fig.2]

## RÉFÉRENCES CITÉES DANS LA DESCRIPTION

**Documents brevets cités dans la description**

- FR 2926323 A1
- FR 2985771 A1
- FR 3029974 A1
- FR 3073895 A1